(19)

Europäisches
Patentamt

European
Patent Office

Office européen
des brevets

(11) **EP 4 456 405 A1**

(12) **EUROPEAN PATENT APPLICATION**
published in accordance with Art. 153(4) EPC

(43) Date of publication:
**30.10.2024 Bulletin 2024/44**

(21) Application number: **22910748.7**

(22) Date of filing: **25.11.2022**

(51) International Patent Classification (IPC):
*H02M 7/48* (2007.01)  *B60L 9/18* (2006.01)
*B60L 50/60* (2019.01)  *B60L 58/25* (2019.01)
*H02M 3/155* (2006.01)

(52) Cooperative Patent Classification (CPC):
**B60L 9/18; B60L 50/60; B60L 58/25; H02M 3/155;
H02M 7/48**

(86) International application number:
**PCT/JP2022/043527**

(87) International publication number:
**WO 2023/120030 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.12.2021  JP 2021210972**

(71) Applicant: **DENSO CORPORATION**
**Kariya-city, Aichi 448-8661 (JP)**

(72) Inventors:
• **TAKASHIMA, Kaoru**
 **Kariya-city, Aichi 448-8661 (JP)**
• **KAZAOKA, Ryoya**
 **Kariya-city, Aichi 448-8661 (JP)**

(74) Representative: **TBK**
**Bavariaring 4-6**
**80336 München (DE)**

(54) **CONTROL DEVICE FOR POWER CONVERTER AND PROGRAM**

(57) A control device (50) for a power converter is to be applied to a system comprising a chargeable/dischargeable power storage device unit (30), coils (11U-11W, 72, 83, 84), and a power converter (20, 70, 80) that electrically connects the coils and the power storage device unit. The control device is provided with: a determination unit for determining whether or not the temperature of the power storage device unit is required to be increased; and a temperature increase control unit for, upon determination by the determination unit that the temperature of the power storage device unit is required to be increased, performing switching control for the power converter so as to repeat, in a prescribed period, one cycle composed of a coil charging mode in which the electric current amount in the coils is gradually increased and a coil discharging mode which is a mode after the coil charging mode and in which the electric current amount in the coils is gradually reduced, and so as to set the electric current amount in the coils to more than zero.

FIG.1

**Description**

[CROSS-REFERENCING OF RELATED APPLICATIONS]

The present application claims priority to Japanese Patent Application No. 2021-210972, filed on December 24, 2021. The contents of these applications are incorporated herein by reference in their entirety.

[TECHNICAL FIELD]

This disclosure relates to a control device for a power converter.

[BACKGROUND ART]

Conventionally, as described in JP5849917B2, a control device for an inverter electrically connecting a coil constituting a motor and a battery is known. This control device transfers alternating current to the battery by transferring current back and forth between the coil and the battery via the inverter by means of the inverter switching control. This generates Joule heat in the battery, which raises the battery temperature.

[PRIOR ART REFERENCES]

[PATENT DOCUMENT]

Patent document 1: JP5849917B2

[SUMMARY OF INVENTION]

According to the control method described in Patent Document 1, the absolute value of the current flowing in the coil periodically becomes 0, and the heating capability of the battery may be insufficient. Thus, the conventional technology may not be able to increase the heating capability of the battery or other power storage device.

The main purpose of the present disclosure is to provide a control device for a power converter and a storage medium that can increase the heating capability for the power storage device.

A control device for a power converter according to an aspect of the present disclosure is applied to a system including a chargeable/dischargeable power storage device, a coil, and the power converter electrically connecting the coil and the power storage device. The device includes: a determination unit that determines whether the storage unit needs to be heated, and a heating control unit that repeatedly executes a single cycle control mode in a specified cycle and performs switching control of the power converter to make the current flowing in the coil higher than 0 when the determination unit determines that the storage device needs to be heated. The single cycle control mode includes a coil charge mode in which a current flowing in the coil is gradually increased and a coil discharge mode in which the current flowing in the coil is gradually decreased, this mode being executed after the coil charge mode.

In the present disclosure, the switching control of the power converter is performed so that the current flowing in the coil becomes higher than 0 in single cycle including the coil charge mode and the coil discharge mode. Therefore, the technology of the present disclosure can increase the DC component in the current flowing in the coil and can increase the charge/discharge current of the power storage device in the coil charge/discharge mode. As a result, the technology of the present disclosure can increase the heating capability for the power storage device. In the present disclosure, the switching control of the power converter is performed so that the current flowing in the coil becomes higher than 0 in single cycle including the coil charge mode and the coil discharge mode. Therefore, the technology of the present disclosure can increase the DC component in the current flowing in the coil and can increase the charge/discharge current of the power storage device in the coil charge/discharge mode. As a result, the technology of the present disclosure can increase the heating capability for the power storage device.

Since the technology of the present disclosure increases the heating capability of the power storage device by increasing the DC component, the charge/discharge current of the storage unit can be increased without increasing the amount of current change flowing in the coil. As a result, the technology of the present disclosure can suppress the noise level generated by the coil due to the switching control by the heating control unit.

[BRIEF DESCRIPTION OF DRAWINGS]

The above objectives and other purposes, features and advantages of this disclosure will become clearer in the following detailed description with reference to the accompanying drawings. In the accompanying drawings:

Fig. 1 shows the overall structure of the control system;

Fig. 2 shows a flowchart of the heating control procedure;

Fig. 3 shows an equivalent circuit;

Fig. 4 shows the frequency amplitude response characteristics;

Fig. 5 shows an example of how a noise tolerance is set;

Fig. 6 shows the relationship between battery temperature and the maximum chargeable and dischargeable power of the battery;

Fig. 7 is a flowchart showing the procedure for calculating the target battery RMS value of current;

Fig. 8 shows the definitions of coil average current value and coil current change;

Fig. 9 shows the relationship between the average coil current, coil current change, and sound pressure level of the noise;

Fig. 10 is a time chart showing the d-axis current, coil current, and inverter current in coil charge mode, reflux mode, and coil discharge mode;

Fig. 11 shows an example of a switching pattern in the coil charge mode;

Fig. 12 shows an example of a switching pattern in the reflux mode;

Fig. 13 shows an example of a switching pattern in the coil discharge mode;

Fig. 14 is a time chart showing the coil current and inverter current in single cycle including the coil charge mode, reflux mode, and coil discharge mode;

Fig. 15 shows the relationship between the average coil current, coil current change, and inverter RMS value of current;

Fig. 16 shows how to set the target current average and target current change;

Fig. 17 shows the relationship between the noise tolerance and the target inverter current RMS value and the target current change;

Fig. 18 shows the relationship between the target inverter RMS value of current and the target average current value;

Fig. 19 shows the relationship between the noise tolerance and the target average current value;

Fig. 20 is a time chart showing the coil current in the single cycle including the coil charge mode, the reflux mode, and the coil discharge mode;

Fig. 21 shows the relationship between the target current average and target current change, and the charge execution time;

Fig. 22 shows the relationship between the charge execution time and target inverter frequency and the first reflux execution time;

Fig. 23 shows the relationship between the target current average value and the discharge execution time;

Fig. 24 shows the relationship between the target current average value and the discharge execution time;

Fig. 25 shows the relationship between the discharge execution time and target inverter frequency and the second reflux execution time;

Fig. 26 illustrates calculations to realize the d-axis voltage;

Fig. 27 shows the relationship between voltage vectors and switching patterns;

Fig. 28 shows how the d-axis voltage vector is generated when the current electric angle is in a sector 1;

Fig. 29 shows the trajectory of the dq-axis current during heating control in the dq-axis current coordinate system;

Fig. 30 shows the relationship between vehicle speed and noise tolerance for another embodiments;

Fig. 31 is a time chart showing the heating control mode for another embodiments;

Fig. 32 is a time chart showing the heating control mode for another embodiments;

Fig. 33 is a time chart showing the heating control mode for another embodiments;

Fig. 34 is a time chart showing the heating control mode for another embodiments;

Fig. 35 is a time chart showing the heating control mode for another embodiments;

Fig. 36 shows other embodiments of the power converter;

Fig. 37 shows other embodiments of power converter.

[DESCEIPTION OF EMBODIMENTS]

One embodiment embodying the control device of the present disclosure will be described below with reference to the drawings. The control device of this embodiment may be mounted to a vehicle, such as an electric vehicle or a hybrid vehicle, for example.

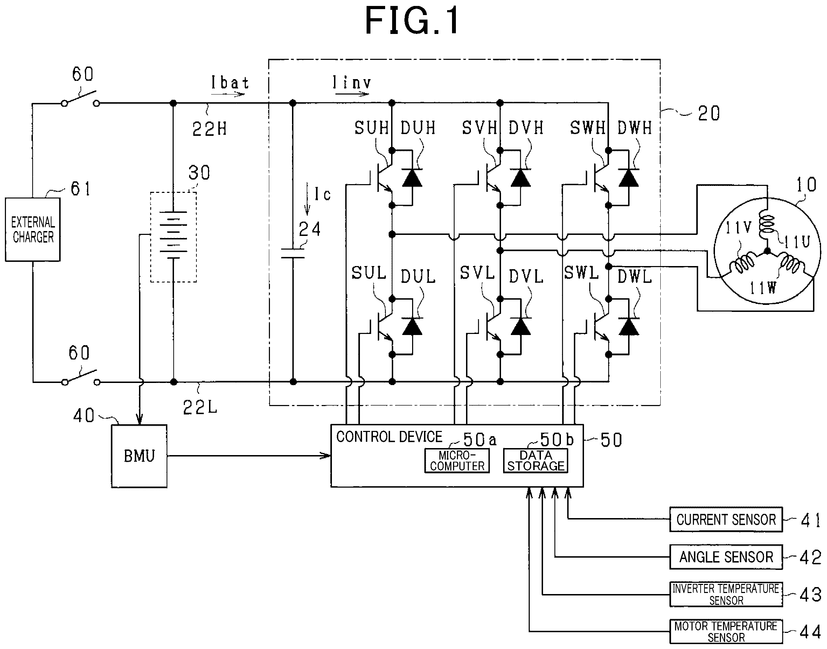

As shown in Figure 1, the system includes a motor 10 and an inverter 20, which is an example of a "power converter." The motor 10 is a brushless synchronous motor, which in this embodiment is a permanent magnet synchronous motor. The motor 10 includes a rotor, not shown, and stator in which coils 11U, 11V, and 11W for the U, V, and W phases are wound. The rotor is capable of transmitting power to the drive wheels of the vehicle. In other words, the motor 10 is the driving power source of the vehicle.

In the inverter 20, the respective upper arm switches SUH, SVH, and SWH for the U, V, and W phases and the respective lower arm switches SUL, SVL, and SWL for the U, V, and W phases are connected in series. In each phase, the low potential terminals of the upper arm switches and the high potential terminals of the lower arm switches are connected to the first ends of the respective coils 11U, 11V, 11W of the motor 10. The second ends of each of the coils 11U, 11V, 11W are connected at a neutral point. In this embodiment, electrical angles of the currents flowing through coils 11U, 11V, and 11W are different by 120°.

In this system, each switch SUH, SUL, SVH, SVL, SWH, SWL is a voltage-controlled semiconductor switching device, specifically an IGBT. Therefore, the high potential terminal of the switch is the collector, and the low potential terminal is the emitter. Freewheel diodes DUH, DUL, DVH, DVL, DWH, and DWL are connected in reverse parallel to respective switch SUH, SUL, SVH, SVL, SWH, and SWL.

The system includes a high potential line 22H, a low potential line 22L, a battery 30, which is an example of the "power storage device," and a smoothing capacitor 24. The battery 30 is a rechargeable battery such as a lithium-ion battery or a nickel metal hydride battery. The battery 30 is, for example, a battery assembly having a configuration in which a plurality of battery cells is connected in series. The positive terminal of the battery 30 is connected to the collector of each upper arm switch SUH, SVH, SWH via the high potential line 22H. The negative terminal of the battery 30 is connected to the emitter of respective lower arm switch SUL, SVL, SWL via the low potential line 22L. The high potential line 22H and the low potential line 22L are connected via a smoothing capacitor 24.

The system further includes a cutoff switch 60 and an external charger 61. The positive terminal of the external charger 61 is connected to the positive terminal of the battery 30 via the cutoff switch 60, and the negative terminal of the external charger 61 is connected to the negative terminal of the battery 30 via the cutoff switch 60.

The system includes a battery monitoring device 40. The battery monitoring device 40 detects battery information including the voltage across the terminals of the battery 30, the current flowing in the battery 30, the temperature of the battery 30, and the SOC (State Of Charge) of the battery 30.

The system further includes a current sensor 41, an angle sensor 42, an angle sensor 43, and a motor temperature sensor 44. The current sensor 41 detects at least two phases of current in each phase flowing in the motor 10. The angle sensor 42 detects the angle of rotation (electric angle) of the rotor of the motor 10. The inverter temperature sensor 43 detects the temperature of the inverter 20 (e.g., the temperature of the upper arm switch and/or the lower arm switch). The motor temperature sensor 44 detects the temperature of the motor 10 (e.g., temperature of the coils). The detected values of each of the sensors 41-44 and the battery monitoring device 40 are input to the control device 50.

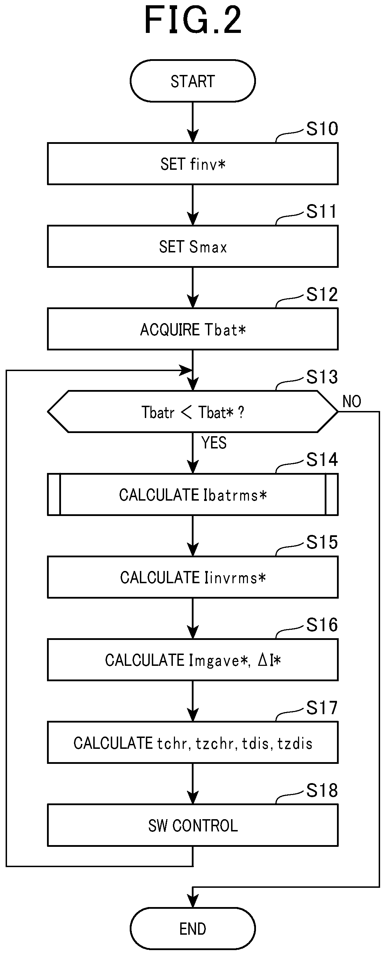

The control device 50 is mainly composed of a microcomputer 50a. The microcomputer 50a includes a CPU (Central Processing Unit). The functions provided by the microcomputer 50a are provided by software stored in a substantive memory device and a computer that executes the software, hardware, or a combination of the software and hardware. For example, if the microcomputer 50a is provided by an electronic circuit that is hardware, the functionality is provided by a digital or analog circuit that includes a plurality of logic circuits. For example, the microcomputer 50a may execute a program stored in data storage 50b, which is a non-transitory tangible storage medium. The program includes, for example, a program for the process shown in Fig. 2, etc. When the program is executed, the method corresponding to the program is performed. Data storage 50b is, for example, a nonvolatile memory. The program stored in data storage 50b may be updateable via a network, such as the Internet, by an OTA (Over The Air) method.

Based on the input detection values, the control device 50 performs a switching control of each of the switches SUH to SWL that make up the inverter 20 to bring the control amount (e.g., torque) of the motor 10 closer to the target value. This allows the rotor of the motor 10 to rotate and the vehicle to run.

The control device 50 raises the temperature of the battery 30 by the switching control of the inverter 20 when the vehicle is stopped, and the rotor has stopped rotating. This operation is hereinafter referred to as heating control. This form of heating control can increase the heating capacity of the battery 30 while suppressing the noise generated by the motor 10 because of the switching control. The heating control is explained below using Fig. 2. The process shown in Fig. 2, for example, is repeatedly executed in a specified cycle.

The control device 50 sets the inverter target frequency finv* in step S10. The specified cycle Tinv, which is the reciprocal of the inverter target frequency finv*, is the cycle of single cycle in which the single cycle control mode is executed; within single cycle, a coil charge mode, a reflux mode, a coil discharge mode, and a reflux mode described below are executed in sequence. The method of setting the inverter target frequency finv* is explained below.

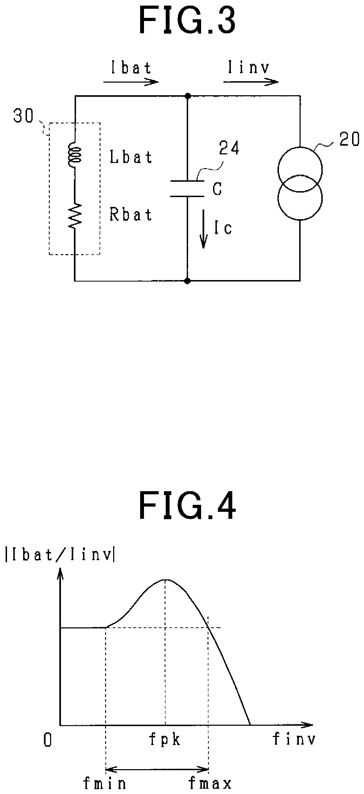

As shown in Figure 1, current flowing in the high potential line 22H from the point of connection with the smoothing capacitor 24 to the upper arm switch is defined as inverter current Iinv (equivalent to "switch current"), current flowing in the battery 30 is defined as battery current Ibat, and current flowing through the smoothing capacitor 24 is defined as capacitor current Ic. For the inverter current Iinv, direction from the connection point of the high potential line 22H and the smoothing capacitor 24 to the upper arm switch is defined as positive, for the battery current Ibat, direction of discharge is defined as positive, and for the capacitor current Ic, direction from the high potential line 22H to the low potential line 22L is defined as positive. The circuit including the battery 30, the smoothing capacitor 24, the inverter 20, the high potential line 22H, and the low potential line 22L is represented by the equivalent circuit shown in Figure 3. In the equivalent circuit, inverter 20 is regarded as an alternating current source that outputs an alternating current with frequency finv. In Figure 3, Lbat represents an inductance of the battery 30, Rbat represents an internal resistance of the battery 30, and C represents a capacitance of the smoothing capacitor 24.

In this case, the frequency response characteristic of the battery current Ibat to the inverter current Iinv is expressed in equation (eq1), and the frequency response characteristic of the ratio of the amplitude of the battery current Ibat to the amplitude of the inverter current Iinv is shown in Figure 4. In equation (eq1), "$\omega = 2\pi \times$ finv" and j is an imaginary number. In this characteristic, the amplitude ratio is a constant value in the first frequency range from 0 Hz to a predetermined frequency, increases monotonically in the second frequency range adjacent to and on the high frequency side of the first frequency range, and decreases monotonically in the third frequency range adjacent to and on the high frequency side of the second frequency range.

[Math 1]

$$Ibat = \frac{Iinv}{(\text{Rbat} + j\omega\text{Lbat}) \cdot j\omega\text{C} + 1} \quad \dots (eq1)$$

The control device 50 sets the inverter target frequency finv* to a frequency higher than 1 Hz in step S10. Desirably, the control device 50 sets the inverter target frequency finv* to a value in the frequency range fmin to fmax (fmin is greater than 1 Hz) where the ratio is greater than the ratio at 1 Hz of the response characteristic shown in Fig. 4, and more preferably, to the frequency fpk that takes the maximum value of the response characteristic shown in Fig. 4, or the resonance frequency of the response characteristic shown in Fig. 4.

Returning to the explanation of Figure 2, the control device 50 sets the noise tolerance Smax in step S11. The noise tolerance Smax is the allowable noise level caused by the motor 10 due to the switching control of the inverter 20 during the heating control.

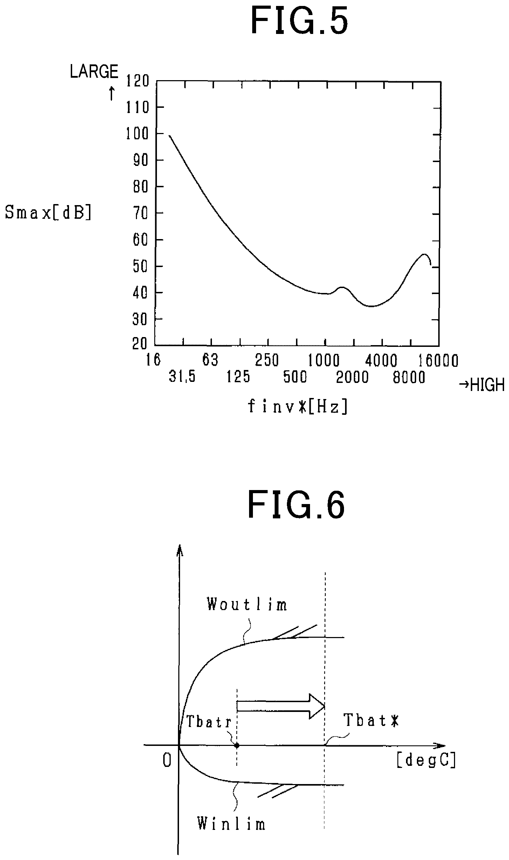

The noise tolerance Smax may be variable based on the inverter target frequency finv* set in step S10. In this case, the control device 50 may set the noise tolerance Smax based on the inverter target frequency finv* and the map information of the inverter target frequency finv* and the noise tolerance Smax, the map information being specified according to the equal loudness curve as shown in Figure 5, for example. The map information is stored in data storage 50b, for example.

Returning to the explanation in Figure 2, the control device 50 obtains the target temperature Tbat* (e.g., 25°C) of the battery 30 in step S12. The control device 50 obtains the target temperature Tbat* from the battery monitoring device 40, for example.

In step S13, the control device 50 obtains the temperature of the battery 30 (hereinafter referred to as "battery temperature Tbatr") from the battery monitoring device 40 and determines whether the battery temperature Tbatr is less than the target temperature Tbat*. If the control device 50 determines that the battery temperature Tbatr is less than the target temperature Tbat*, the control device 50 executes the heating control of the battery 30 shown in steps S14 to S18. The process of step S13 corresponds to the "determination unit". The processing of steps S14 to S18 corresponds to the "heating control unit".

Figure 6 shows the relationship between the temperature of battery 30, the maximum dischargeable power Woutlim, and the maximum chargeable power Winlim of battery 30. The maximum dischargeable power Woutlim and the maximum chargeable power Winlim depend on the temperature of the battery 30 and tend to be smaller as the temperature is lower. Therefore, after the heating control is started, the heating control is continued until the battery temperature Tbatr is determined to have reached the target temperature Tbat* in step S13.

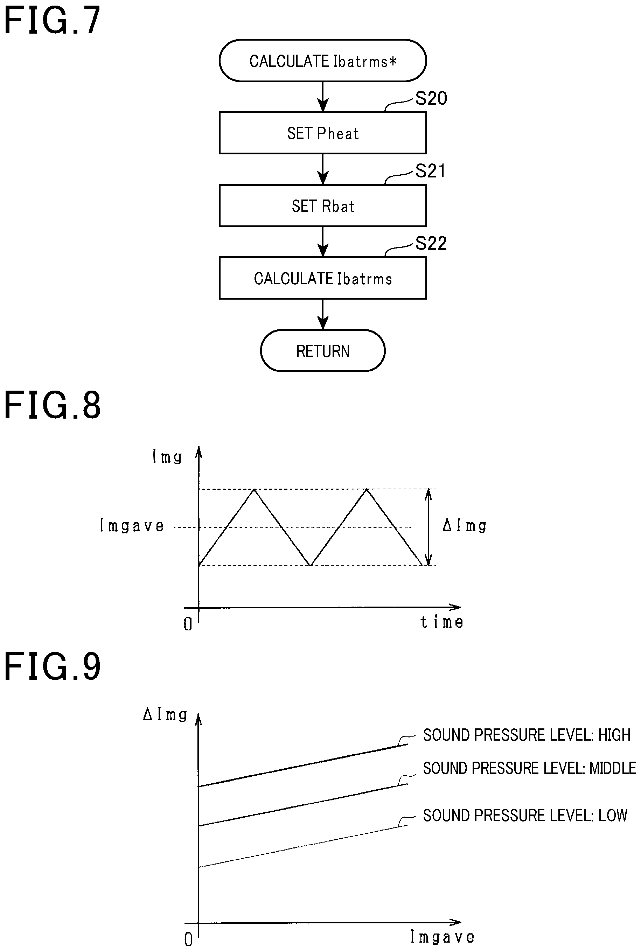

Returning to the explanation in Figure 2, the control device 50 performs the calculation process of a target battery RMS value of current Ibatrms*, which is a target value of the RMS value (effective value) of current to flow to the battery 30, in step S14. This calculation process is explained below using Figure 7.

The control device 50 sets a battery heating power Pheat in step S20. In this embodiment, the control device 50 sets the battery heating power Pheat to the dischargeable power Wb of the battery 30 (specifically, for example, the above maximum dischargeable power Woutlim) when the cutoff switch 60 is off and the external charger 61 is not connected to the battery 30. On the other hand, when the cutoff switch 60 is on and the external charger 61 is connected to the battery 30 which is being externally charged, the control device 50 sets the battery heating power Pheat to the sum of the dischargeable power Wb of the battery 30 and the outputtable power Wc of the external charger 61.

In step S21, the control device 50 estimates the internal resistance Rbat of the battery 30 based on the battery temperature Tbatr and SOC obtained from the battery monitoring device 40. For example, the control device 50 may estimate the internal resistance Rbat based on map information in which the internal resistance Rbat is defined in relation to the battery temperature Tbatr and SOC.

The internal resistance Rbat varies with the frequency of the current flowing in the battery 30. Therefore, the above map information may be information in which the internal resistance Rbat is specified for the battery temperature Tbatr, SOC, and inverter target frequency finv*. In this case, the control device 50 may estimate the internal resistance Rbat based on this map information, i.e. the inverter target frequency finv*, the battery temperature Tbatr, and SOC.

In step S22, the control device 50 calculates the target battery RMS value of current Ibatrms* based on the set battery heat-up power Pheat and the estimated internal resistance Rbat. Specifically, the control device 50 may calculate the target battery RMS value of current Ibatrms* based on the equation (eq2) because of the relationship "power = resistance x current^2".

[Math2]

$$Ibatrms* = \sqrt{\frac{Pheat}{Rbat}} \cdots (eq2)$$

In a case that the internal resistance Rbatis is calculated in the calculation process of step S21 based on the current frequency, the target battery current RMS value Ibatrms* may be calculated based on the current frequency too.

Returning to the explanation of Figure 2, in step S15, the control device 50 calculates the target inverter RMS value of current Iinvrms*, which is a target value of the inverter RMS value of current Iinv, based on the inverter target frequency finv* and the target battery RMS value of current Ibatrms*. In detail, the control device 50 calculates the target inverter RMS value of current Iinvrms* so that, in the response characteristics shown in Figure 4, the value on the vertical axis corresponding to the inverter target frequency finv* is the value calculated by dividing the target battery RMS value of current Ibatrms* by the target inverter RMS value of current Iinvrms*. This allows the amount of current transferred between the battery 30 and the coil of the motor 10 to be as small as possible, while increasing the heating capacity of the battery 30.

In step S16, the control device 50 calculates the target current average value Imgave* and the target current change amount ΔI*. The target current average value Imgave* is a target value of the time average value of the current flowing to the coil in single cycle of the heating control. The target current change amount ΔI* is a target value of the amount of current change to be applied to the coil during the coil charge mode execution period described below in single cycle of the heating control. The target current average value Imgave* and the target current change amount ΔI* are defined so that the inverter RMS value of current Iinv is close to the target inverter RMS value of current Iinvrms* and the noise level generated by the motor 10 due to the heating control does not exceed the noise tolerance Smax. The calculation methods of the target current average value Imgave* and the target current change amount ΔI* are explained below.

In Figure 8, the coil current Img is a current with the largest absolute value among the currents flowing in each phase coil 11U, 11V, 11W in the heating control. The coil current Img is defined as positive in the direction from the inverter 20 to the neutral point. The coil average current value Imgave is a time average of the coil current Img, and the coil current change ΔImg is a change in the coil current Img.

The noise emitted by the motor 10 as a result of heating control is caused by the stator of the motor 10 vibrating due to the magnetic force change Δcp generated by the current change in the coil. The magnetic force change Δcp is determined by the product of the inductance Lmg of the coil and the coil current change ΔImg. Therefore, there is a positive correlation between a sound pressure level of the noise and the coil current change ΔImg.

On the other hand, an increase in the absolute value of the coil average current Imgave causes magnetic saturation of the coil. As a result, the inductance Lmg of the coil slightly decreases. Therefore, even if the coil current change ΔImg is the same, the larger the absolute value of the coil average current value Imgave, the lower the sound pressure level of the noise. Therefore, the sound pressure level of the noise is correlated with "ΔImg/Imgave". The contour lines of the sound pressure level in the two-dimensional region defined by the coil average current value Imgave and the coil current change ΔImg are shown in Figure 9.

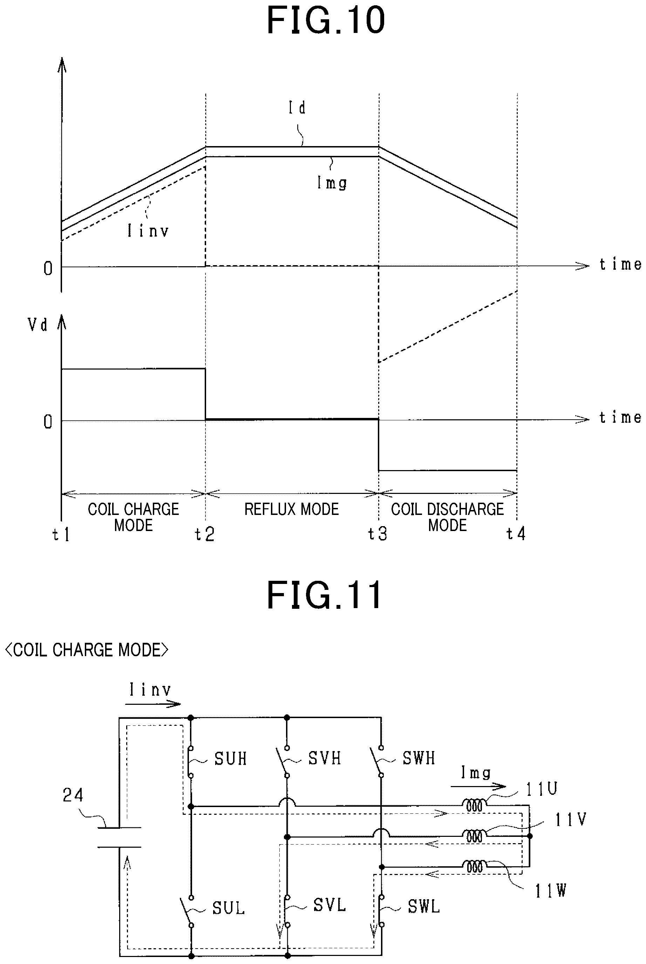

The single cycle control mode of the heating control is then described; the single cycle control mode includes a coil charge mode, a reflux mode, and a coil discharge mode. Figure 10 shows the transition of coil current Img, inverter current Iinv, and d-axis current Id flowing in the coil in each mode. Note that Figure 10 shows the transition when the electric angle is 0.

The coil charge mode is executed at time t1-t2 in Figure 10. The coil charge mode is a control mode in which current flows from the smoothing capacitor 24 and the battery 30 through the inverter 20 (in detail, the upper arm switch of the inverter 20) to the coil, as shown in Figure 11. In the coil charge mode, the upper arm switch of some of the phases is turned on and the lower arm switch of at least one of the other phases is turned on. In the example shown in Figure 11, the SUH arm switch on phase U is turned on, and the SVL and SWL lower arm switches on phases V and W are turned on.

The coil charge mode is a control mode that outputs a constant d-axis voltage based on the electric angle θ detected by the angle sensor 42. In this case, as shown in Figure 10, the absolute value of the coil current Img and the absolute value of the d-axis current Id gradually increase, and the absolute value of the inverter current Iinv equals the absolute value of the coil current Img. In this case, the inverter current Iinv is a positive current. In Figure 10, the inverter current Iinv and the coil current Img in the coil charge mode are shown slightly shifted to make them easier to see.

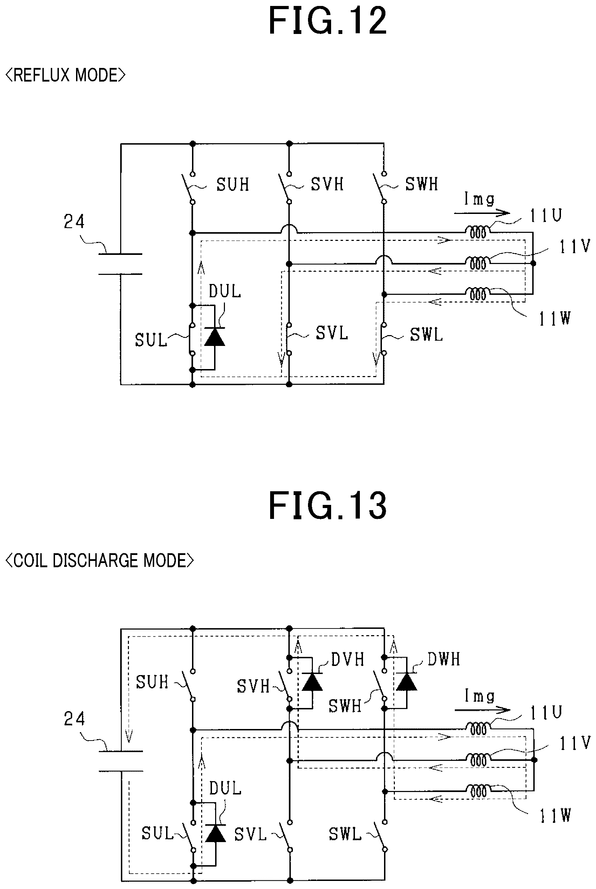

The reflux mode is executed at time t2 to t3 in Figure 10. The reflux mode is a control mode in which current is circulated in the circuit including the switch of one of the upper and lower arms of the inverter 20 and the coil, as shown in Figure 12. During the execution period of the reflux mode, the inverter current Iinv is zero. In the reflux mode, the switches of all phases in one of the upper and lower arms of the inverter 20 are turned off and the switch of at least one phase in the other arm is turned on. In the example shown in Figure 12, the upper arm switches of all phases are turned off and the lower arm switches of all phases are turned on. The switches of the phases in which current flows through the freewheeling diodes may be turned off.

In the reflux mode, the output voltage of the inverter 20 is zero. If conduction losses are ignored, the coil current Img and d-axis current Id will be constant, and the inverter current Iinv will be zero.

The coil discharge mode is executed at time t3-t4 in Figure 10. The coil discharge mode is a control mode in which current flows from the coils to the smoothing capacitor 24 and battery 30 via the inverter 20, as shown in Figure 13. In this coil discharge mode, the upper and lower arm switches of all phases are turned off.

The coil discharge mode is a control mode that outputs a d-axis voltage based on the electric angle θ with the same magnitude as the d-axis voltage in the coil charge mode and with the opposite polarity to the d-axis voltage in the coil charge mode. In this case, as shown in Figure 10, the absolute value of the coil current Img, the absolute value of the d-axis current Id, and the absolute value of the inverter current Iinv gradually decrease, and the absolute value of the inverter current Iinv equals the absolute value of the coil current Img. In this case, the inverter current Iinv is a negative current.

In this mode, only d-axis voltage out of d-axis and q-axis voltage is output in the coil charge and coil discharge modes. This prevents q-axis current from flowing in the coil and prevents the rotor from rotating during heating control.

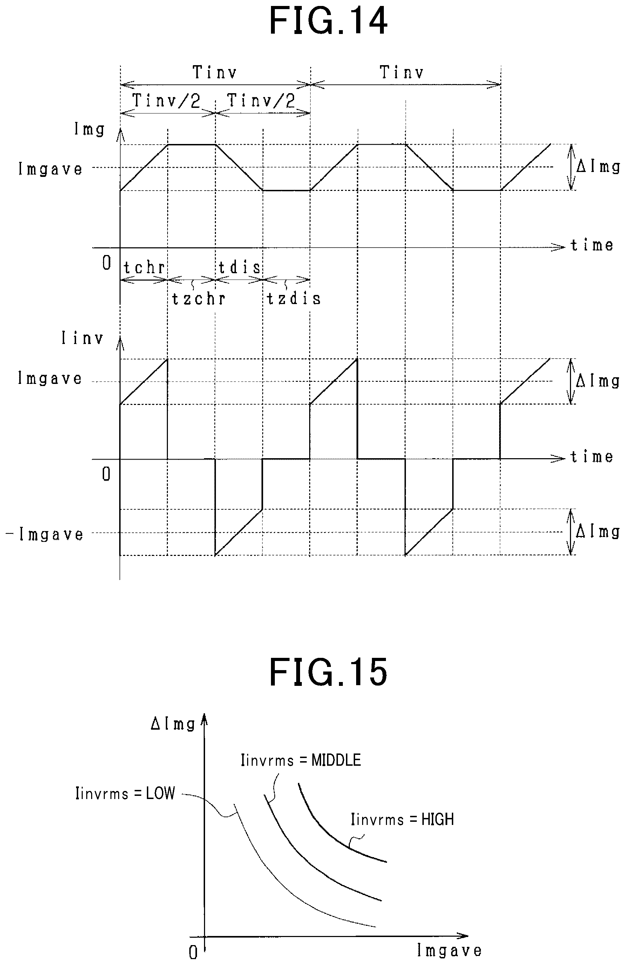

The single cycle control mode of the heating control is described in more detail in Figure 14. Tinv shown in Fig. 14 is the specified cycle and is the reciprocal of the inverter target frequency finv*. The single cycle control mode of the heating control is repeatedly executed at each specified cycle. The specified cycle Tinv is divided into two equal parts, the first half cycle and the second half cycle. In the first half cycle (Tinv/2), the control device 50 executes the coil charge mode and the reflux mode (corresponding to the "first reflux mode") sequentially. In the first half cycle, the execution time of the coil charge mode is defined as the charge execution time tchr, and the execution time of the reflux mode is defined as the first reflux execution time tzchr. The control device 50 executes the coil discharge mode and the reflux mode (corresponding to the "second reflux mode") sequentially in the second half cycle. In the second half cycle, the execution time of the coil discharge mode is defined as the discharge execution time tdis, and the execution time of the reflux mode is defined as the second reflux execution time tzdis.

In this case, it is assumed that the current fluctuation occurs by the amount of coil current change ΔImg with respect to the coil average current value Imgave. Also, the charge run time tchr and discharge run time tdis are expressed as tact, respectively. In other words, the charge run time tchr and discharge run time tdis assumed to be equal. In this case, the inverter RMS value of current Iinvrms is equal to the coil RMS value of current when the current flowing in the coil is the coil average current value Imgave for only tact during the period tinv/2, which is expressed by Eq. 3.

[Math3]

$$Invrms = \frac{2\sqrt{2}}{\pi} Image \cdot \frac{tact}{\frac{1}{finv*}} \quad \cdots (eq3)$$

Here, there is a relationship "ΔI = V/Lmg × t" between the voltage V applied to the coil and the inductance Lmg of the coil. Therefore, tact and the coil current change ΔImg have a proportional relationship as shown in the equation (eq. 4).

[Math4]

$$\Delta Img \propto tact \quad \cdots (eq4)$$

Therefore, as shown in equation (eq5), the inverter RMS value of current Iinvrms is proportional to the product of the coil average current Imgave and the coil current change ΔImg.

[Math5]

$$Iinvrms \propto Imgave \cdot \Delta Img \quad \cdots (eq5)$$

Thus, the contour lines of the inverter RMS value of current Iinvrms are shown in Figure 15, for example, in a two-dimensional region with the coil average current value Imgave and the coil current change ΔImg, respectively, as the coordinate axes.

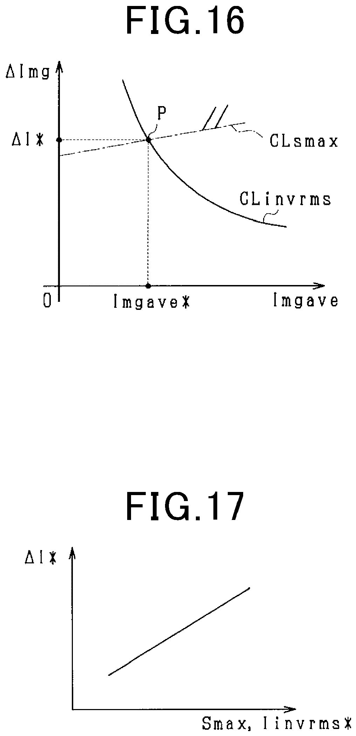

The contour lines shown in Figure 15 and the contour lines shown in Figure 9 are shown in one two-dimensional region, as shown in Figure 16. In Figure 16, the single-dashed line CLsmax shows the contour line in Figure 9, and the solid line CLinvrms shows the contour line in Figure 15. When the noise tolerance Smax is determined, the contour line CLsmax is determined, and when the inverter RMS value of current Iinvrms is determined, the contour line CLinvrms is determined. The control device 50, for example, sets the coil average current value Imgave corresponding to the intersection point P of the contour lines CLsmax and CLinvrms in the two-dimensional domain as the target current average value Imgave* and the coil current change amount ΔImg corresponding to the intersection point P as the target current change amount ΔI*.

In other words, the control device 50 calculates the target current average value Imgave* and the target current change amount ΔI* based on the noise tolerance Smax and the target inverter RMS value of current Iinvrms*. Map information that defines the target current average value Imgave* and the target current change amount ΔI* in relation to the noise tolerance Smax and the target inverter RMS value of current Iinvrms* is stored in data storage 50b. The control device 50 calculates the target current average value Imgave* and the target current change amount ΔI* based on this map information, the noise tolerance Smax set in step S11, and the target inverter RMS value of current Iinvrms* calculated in step S15.

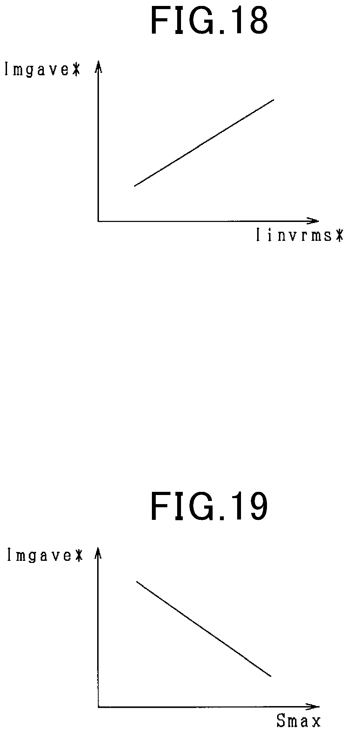

As shown in Fig. 17, the larger the noise tolerance Smax and the target inverter RMS value of current Iinvrms* are, the larger the target current change ΔI* is set by the control device 50. As shown in Fig. 18, the larger the target inverter RMS value of current Iinvrms* is, the larger the target current average value Imgave* is set by the control device 50. As shown in Fig. 19, the larger the allowable noise value Smax is, the smaller the target current average value Imgave* is set by the control device 50.

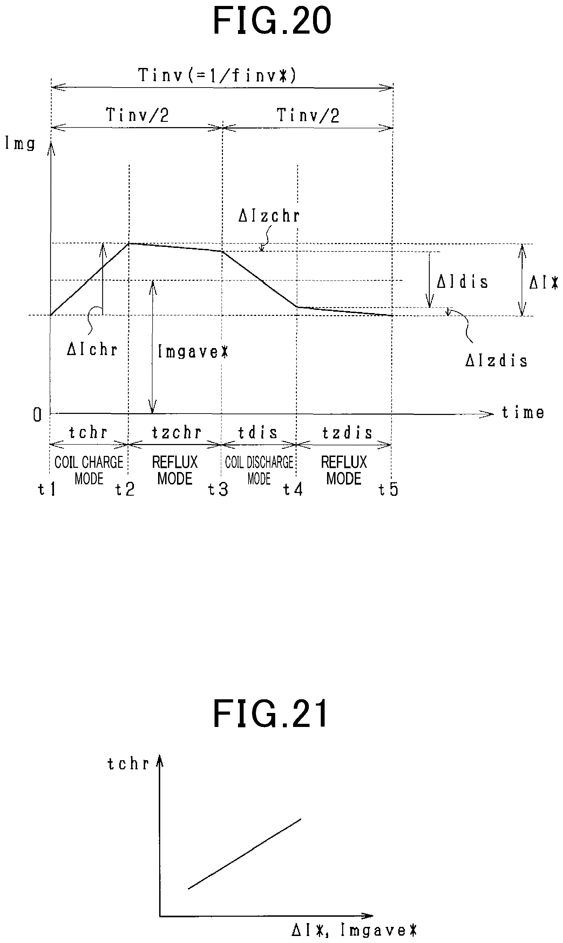

Returning to the explanation of Figure 2, the control device 50 calculates the charge execution time tchr, the first reflux execution time tzchr, the discharge execution time tdis, and the second reflux execution time tzdis in single cycle at step S17. The calculation method of each time is explained below with reference to Fig. 20.

The amount of change in coil current Img during the charge execution time tchr from time t1 to t2 in Figure 20 is defined as ΔIchr, and the amount of change in coil current Img during the first reflux execution time tzchr from time t2 to t3 is defined as ΔIzchr. The amount of change of the coil current Img during the discharge execution time tdis from time t3 to t4 is defined as ΔIdis, and the amount of change of the coil current Img during the second return execution time tzdis from time t4 to t5 is defined as ΔIzdis. In this case, equations (eq6) to (eq12) are valid.

[Math6]

$$Vbat = \frac{\Delta Ichr}{tchr} Lmg + Imgave * \cdot Rmg \quad \cdots (eq6)$$

[Math7]

$$-Vbat = \frac{\Delta Idis}{tdis} Lmg + Imgave * \cdot Rmg \quad \cdots (eq7)$$

[Math8]

$$0 = \frac{\Delta Izchr}{tzchr} Lmg + (Imgave * + \frac{\Delta I *}{2}) \cdot Rmg \quad \cdots (eq8)$$

[Math9]

$$0 = \frac{\Delta Izdis}{tzdis} Lmg + (Imgave * - \frac{\Delta I *}{2}) \cdot Rmg \quad \cdots (eq9)$$

[Math 10]

$$0 = \Delta Ichr + \Delta Idis + \Delta Izchr + \Delta Izdis \quad \cdots (eq10)$$

[Math 11]

$$\Delta I *= \Delta Ichr \quad \cdots (eq11)$$

[Math 12]

$$\frac{1}{2finv *} = tchr + tzchr = tdis + tzdis \quad \cdots (eq12)$$

In the above equations, Vbat represents the voltage between the terminals of the battery 30, Rmg represents the resistance of the coil (d-axis resistance in detail), and Lmg represents the inductance of the coil (d-axis inductance in detail). From the above equations, equations (eq13)-(eq16) are derived.

[Math13]

$$tchr = \frac{\Delta I *}{(Vbat - Imgave *\cdot Rmg)} \quad \cdots (eq13)$$

[Math 14]

$$tzchr = \frac{1}{2finv *} - tchr \quad \cdots (eq14)$$

[Math15]

$$tdis = \frac{Lmg \cdot \Delta I * + Imgave *\cdot Rmg \left(\frac{1}{finv *} - tchr\right) - \frac{\Delta I *}{2} Rmg \cdot tchr}{(Vbat + Imgave *\cdot Rmg)\{\left(Imgave * -\frac{\Delta I *}{2}\right) - 1\}} \quad \cdots (eq15)$$

[Math 16]

$$tzdis = \frac{1}{2finv *} - tdis \quad \cdots (eq16)$$

The control device 50 lengthens the charge execution time tchr the larger the target current change ∆I* and the target current average Imgave* are, as shown simply in Figure 21 based on formula (eq. 13). The higher the voltage Vbatr between terminals of the battery 30 obtained from the battery monitoring device 40, the shorter the charge execution time tchr is.

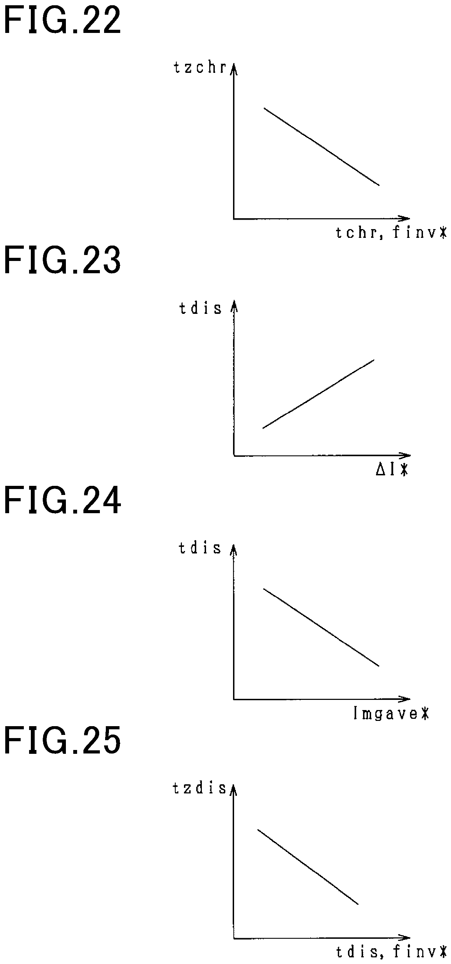

Based on equation (eq. 14), the control device 50 shortens the first reflux execution time tzchr the longer the charge execution time tchr is or the higher the inverter target frequency finv* is, as shown simply in Figure 22.

Based on the equation (eq. 15), the control device 50 increases the discharge execution time tdis the larger the target current change ∆I* is, as shown simply in Fig. 23. The control device 50 shortens the discharge execution time tdis the larger the target current average Imgave*, as shown in Fig. 24. The higher the voltage Vbatr between the terminals of the battery 30 is, the shorter the discharge execution time tdis.

Based on equation (eq. 16), the control device 50 shortens the second reflux execution time tzdis the longer the discharge execution time tdis or the higher the inverter target frequency finv* is, as shown simply in Figure 25.

In this mode, the charge execution time tchr in the specified cycle Tinv is longer than the discharge execution time tdis. This is a setting that considers that losses are generated by current cycling in the reflux mode.

Returning to the explanation of Fig. 2, the control device 50, in step S18, based on the target current average value Imgave* and target current change amount ΔI* calculated in step S16, each time tchr, tzchr, tdis, tzdis, and electric angle θ calculated in step S17, performs single cycle above is performed to repeat the above single cycle. In this case, the control device 50 achieves the d-axis voltage output by the inverter 20 in the coil charge mode and coil discharge mode by adjusting the execution time of each of the two switching patterns according to the electric angle θ.

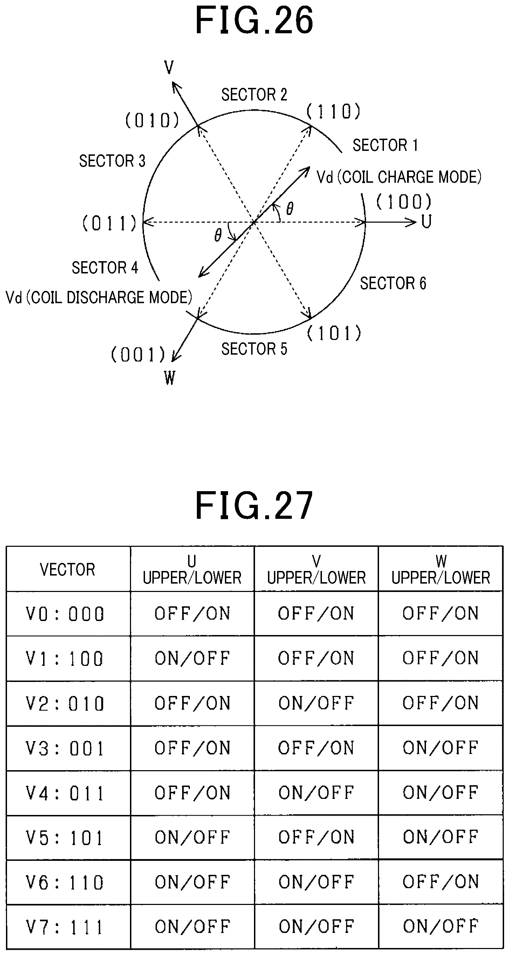

Figure 26 illustrates the operations to realize the d-axis voltage. In Figure 26, the vector space consisting of voltage vectors (100) for phase U, (010) for phase V, and (001) for phase W, shifted by 120° in electrical angle, is divided into six sectors for each 60° electrical angle. The switching patterns of the upper and lower arm switches of each phase in the case of realizing voltage vectors (110), (011), and (101) in addition to voltage vectors (100), (010), and (001) are shown in Figure 27.

The control device 50 realizes the d-axis voltage based on information indicating which sector the current electrical angle θ belongs to and two effective voltage vectors that demarcate that sector and have a phase difference of 60 degrees. The following is an example of a case where the current electric angle θ belongs to sector 1.

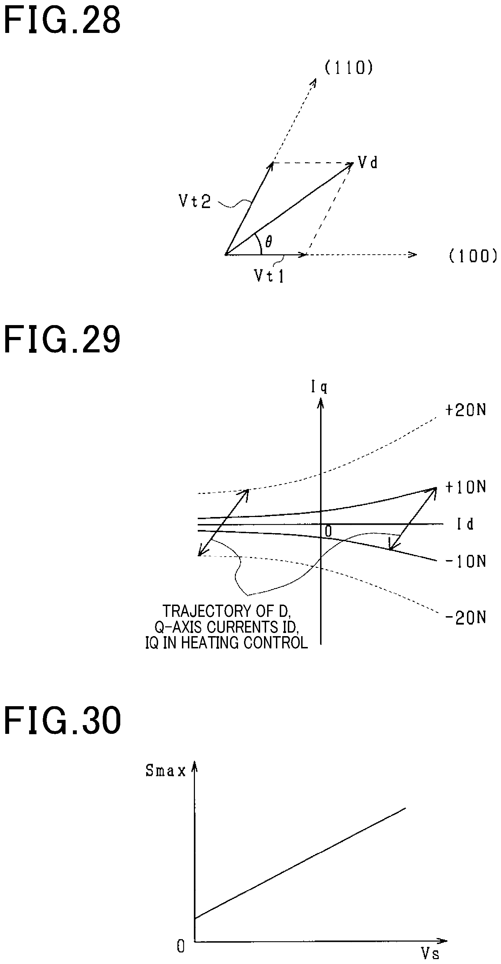

. Suppose that the d-axis voltage vector of inverter 20 belongs to sector 1 and the d-axis voltage vector is located at a position rotated by θ counterclockwise from the voltage vector (100). The d-axis voltage vector output in the coil charge mode can be realized as a composite vector of voltage vector (100) Vt1 and voltage vector (110) Vt2, as shown in Figure 28. Therefore, the control device 50 can make the inverter 20 output the d-axis voltage vector by adjusting the ratio between the appearance time of the voltage vector (100) and the appearance time of the voltage vector (110) according to the electric angle θ. Here, "(100) appearance time: (110) appearance time = sin(60°-θ): sinθ". Also, "appearance time of (100) + appearance time of (110) = tchr".

On the other hand, the d-axis voltage vector output in the coil discharge mode has a phase difference of 180 degrees from the d-axis voltage vector output in the coil charge mode. Therefore, the d-axis voltage vector output in coil discharge mode is a vector at a position rotated counterclockwise by θ more than the voltage vector (011) in sector 4 and can be realized as a composite vector of voltage vector (011) and voltage vector (001). Therefore, the control device 50 can make the inverter 20 output the d-axis voltage vector by adjusting the ratio of the appearance time of the voltage vector (011) to the appearance time of the voltage vector (001) according to the electric angle θ. Here, "appearance time of (011): appearance time of (001) = sin(60°-θ): sinθ". Also, "appearance time of (011) + appearance time of (001) = tdis".

The embodiment explained in detail above performs switching control of the inverter 20 so that the absolute value of the current flowing in the coil is greater than 0 in the single cycle control mode including the coil charge mode, the reflux mode, the coil discharge mode, and the reflux mode. Therefore, the embodiment can increase the DC component in the current flowing in the coil and increase the charge/discharge current of the battery 30 in the coil charge/discharge mode. As a result, the embodiment can increase the heating capacity of the battery 30.

In addition, the embodiment can increase the charge/discharge current of the battery 30 without increasing the amount of current change flowing in the coil by increasing the above DC component to increase the heating capacity of the battery 30. As a result, the embodiment can suppress the noise level generated by the motor 10 due to the switching control by the heating control unit.

Thus, the embodiment can quickly raise the temperature of the battery 30 while suppressing noise.

If the rate of change of the coil current Img is high in the coil charging/discharge mode, there is a concern that the coil current change ΔImg in the specified cycle Tinv will greatly exceed the target current change ΔI*. In this regard, the single cycle control mode of the embodiment includes a reflux mode. Therefore, the embodiment can prevent the coil current change amount ΔImg from greatly exceeding the target current change amount ΔI* in the specified cycle Tinv even when the coil current Img change speed is high. As a result, the embodiment can accurately suppress noise in the heating control.

<Other embodiments>

The above embodiment may be modified as follows.

The control device 50 may perform switching control of the inverter 20 so that a strong field current (Id > 0) flows as the d-axis current in the heating control. Figure 29 shows the trajectory of d, q-axis currents Id, Iq of the single cycle in the case of strong field current (Id > 0) as d-axis current and in the case of weak field current (Id < 0) as d-axis current. When a strong field current is applied, even if the q-axis current flows due to a sensor detection error, control error, or some other factor and torque is generated, the amount of torque fluctuation can be smaller than in the case of a weak field current. As a result, discomfort caused to the user by the heating control can be suppressed.

The information on battery and inverter currents used in the processes shown in Figs. 2 and 7 is not limited to current RMS values, but can be, for example, current amplitudes.

As shown in Figure 30, the control device 50 may set the noise tolerance Smax smaller as the traveling speed Vs of the vehicle is lower. This is because the lower the traveling speed Vs, the more noticeable the noise generated by the motor 10 is to the user. This setting may be performed, for example, during coasting, which is coasting of the vehicle.

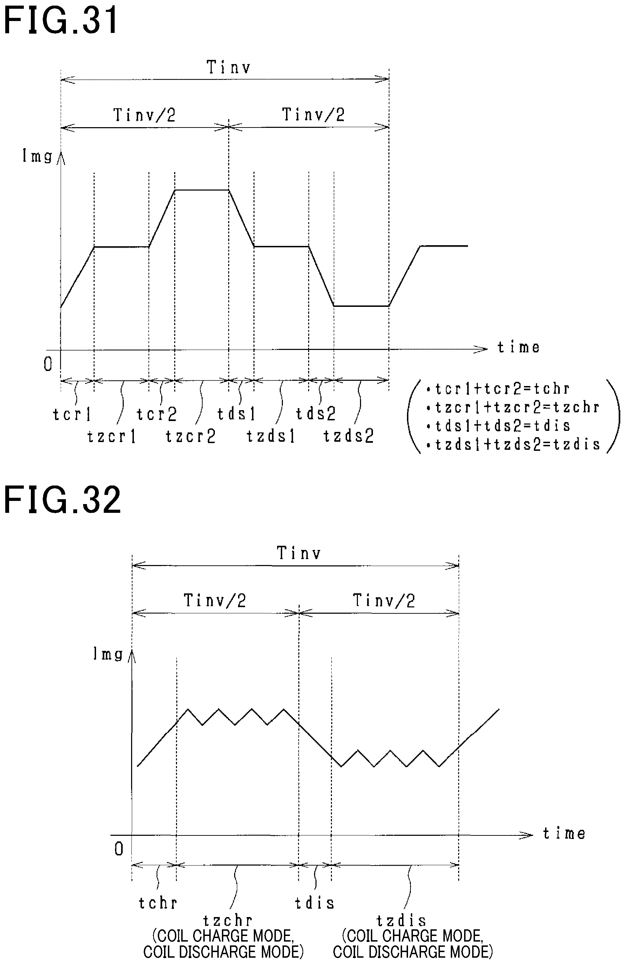

In the single cycle control mode, the coil charge mode, the reflux mode, and the coil discharge mode may be divided into N (N is an integer greater than or equal to 2). Figure 31 shows an example where these modes are divided into two. In this case, in the coil charge mode, control is performed so that the sum of the divided charge execution times tcr1 and tcr2 becomes the charge execution time tchr calculated in step S17. In the reflux mode following the coil charge mode, control is performed so that the sum of the divided first reflux execution time tzcr1, tzcr2 becomes the first reflux execution time tzchr calculated in step S17. On the other hand, in the coil discharge mode, control is performed so that the total value of the divided discharge execution time tds1, tds2 becomes the discharge execution time tdis calculated in step S17. In the reflux mode following the coil discharge mode, control is performed so that the sum of the divided second reflux execution time tds1 and tds2 becomes the second reflux execution time tzdis calculated in step S17.

As shown in Figure 32, a mode in which the coil charge mode and the coil discharge mode are repeated with a period shorter than Tinv/2 may be executed as (instead of) the reflux mode. Even in this case, the current flowing through the coil can still be maintained.

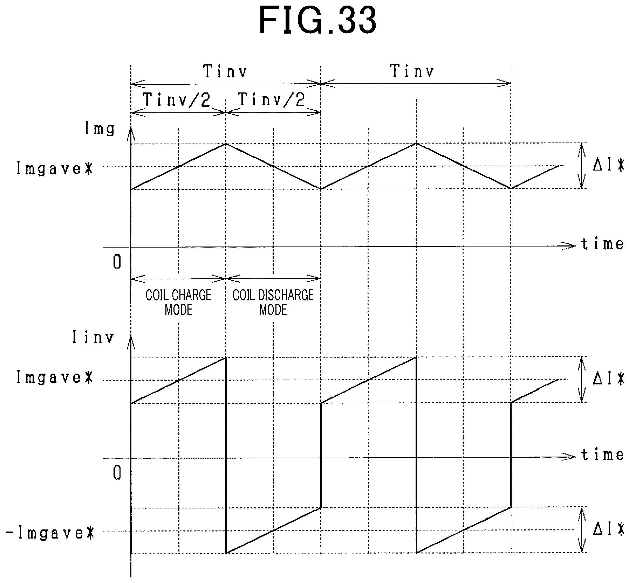

As shown in Figure 33, the single cycle control mode may not include the reflux mode, and single cycle control mode may consist of the coil charge mode and the coil discharge mode.

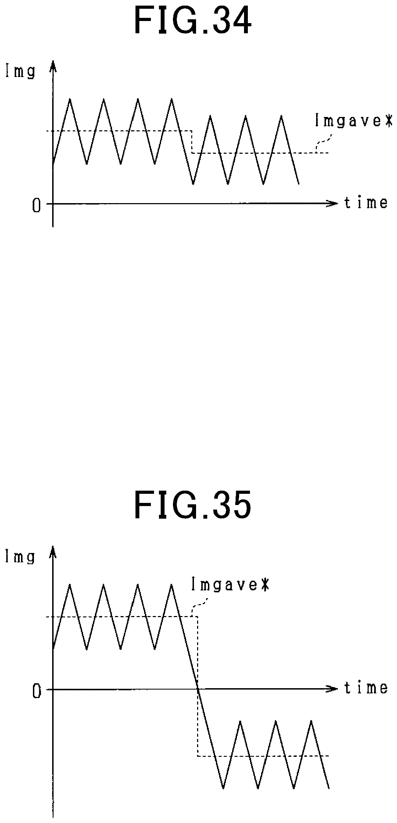

In each of the above forms, the target current average Imgave* can vary with time. Figures 34 and 35 show an example where the single cycle control mode shown in Figure 33 is repeated.

In the above embodiment, it was explained that the control device 50 repeats the single cycle control mode of the heating control without setting the current flowing to the coil to 0 until it determines that the battery temperature Tbatr has reached the target temperature Tbat*. For example, the control device 50 may provide a period between the repeated single cycle control modes of the heating control in which the switching control of the inverter 20 is stopped and the current flowing to the coil is temporarily set to 0.

The chargeable/dischargeable power storage device is not limited to a battery, but may also be a large-capacity capacitor, such as, an electric double-layer capacitor.

Since the internal resistance Rbat and d-axis inductance depend on temperature, the control device 50 may correct the target current average value Imgave* and target current change ∆I*, etc. based on the detected values of at least one of the inverter temperature sensor 43 and motor temperature sensor 44.

It was explained that the specified cycle Tinv is set for a fixed period during the heating control, but it is not limited to this. For example, the specified cycle Tinv may be changed every cycle.

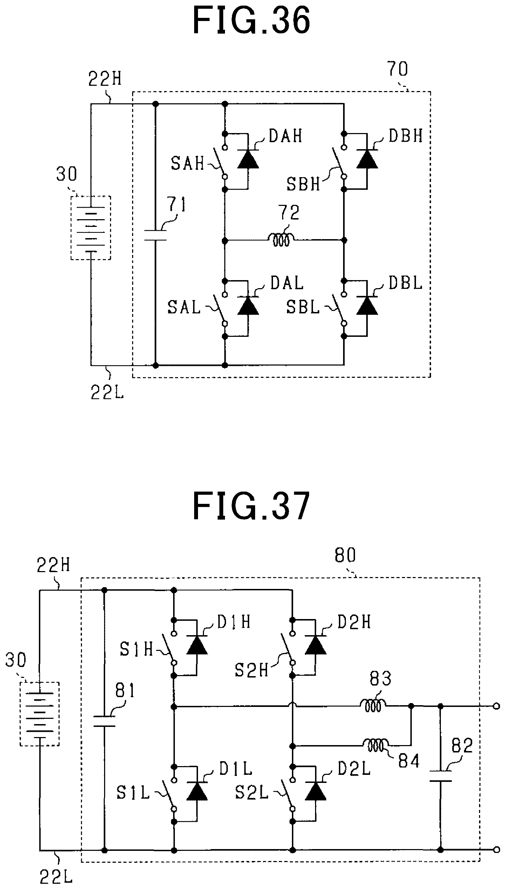

The power converter is not limited to a multiphase inverter, but can be, for example, the full bridge circuit 70 shown in Figure 36 or the DCDC converter 80 shown in Figure 37. These two configurations are described below. In Figs. 36 and 37, the configuration of the control device 50 and other components shown in the previous Fig. 1 are omitted.

The full bridge circuit 70 shown in Figure 36 includes a series connection of a first upper arm switch SAH and a first lower arm switch SAL, and a series connection of a second upper arm switch SBH and a second lower arm switch SBL. In Figure 36, switches SAH, SAL, SBH, and SBL, which are IGBTs, are shown in simplified form. Freewheel diodes DAH, DAL, DBH, and DBL are connected in reverse parallel to respective switches SAH, SAL, SBH, and SBL. Each switch SAH, SAL, SBH, SBL is switching controlled by a controller.

The full bridge circuit 70 includes a smoothing capacitor 71 and a coil 72. The coil 72 connects the connection points of the first upper arm switch SAH and the first lower arm switch SAL to the connection points of the second upper arm switch SBH and the second lower arm switch SBL.

An example of the heating control performed by the controller for the full bridge circuit 70 shown in Figure 36 is described below. In single cycle of heating control, the coil charge mode is a mode in which the first upper arm switch SAH and the second lower arm switch SBL are turned on and the first lower arm switch SAL and the second upper arm switch SBH are turned off. The reflux mode following the coil charge mode is the mode in which the first upper arm switch SAH of each switch SAH, SAL, SBH, and SBL is turned on, or the second lower arm switch SBL of each switch SAH, SAL, SBH, and SBL is turned on. The coil discharge mode following the reflux mode is the mode in which each of the switches SAH, SAL, SBH, and SBL is turned off. The reflux mode following the coil discharge mode is the same as the reflux mode following the coil charge mode. By repeating the above described single cycle, the battery 30 can be quickly warmed up while suppressing the noise generated by the coil 72 due to the heating control.

. The DCDC converter 80 shown in Figure 37 is a boost chopper circuit and includes series connectors of first upper arm switch S1H and first lower arm switch S1L, and second upper arm switch S2H and second lower arm switch S2L. In Figure 37, switches S1H, S1L, S2H, and S2L, which are IGBTs, are shown in simplified form. Freewheel diodes D1H, D1L, D2H, and D2L are connected in reverse parallel to each switch S1H, S1L, S2H, and S2L. Each switch S1H, S1L, S2H, and S2L is switching controlled by a controller.

. The DCDC converter 80 includes a first smoothing capacitor 81, a second smoothing capacitor 82, a first coil 83, and a second coil 84. The first coil 83 connects the connection points of the first upper arm switch S1H and the first lower arm switch S1L to one end of the second smoothing capacitor 82. The second coil 84 connects the connection points of the second upper arm switch S2H and the second lower arm switch S2L to one end of the second smoothing capacitor 82.

An example of the heating control performed by the control device 50 for the DCDC converter 80 shown in Figure 37 will be described. The series connection of the first coil 83 and the second coil 84 in Fig. 37 can be regarded as the coil 72 in Fig. 36. In single cycle of heating control, the coil charge mode is a mode in which the first upper arm switch S1H and the second lower arm switch S2L are turned on and the first lower arm switch S1L and the second upper arm switch S2H are turned off. The reflux mode following the coil charge mode is a mode in which the first upper arm switch S1H of each of the switches S1H, S1L, S2H, and S2L is turned on, or the second lower arm switch S2L of each of the switches S1H, S1L, S2H, and S2L is turned on. The coil discharge mode following the reflux mode is the mode in which each of the switches S1H, S1L, S2H, and S2L is turned off. The reflux mode following the coil discharge mode is the same as the reflux mode following the coil charge mode. By repeating the above described single cycle, the battery 30 can be quickly warmed up while suppressing the noise generated by the first and second coils 83, 84 due to the heating control. The reflux mode may be excluded from the single cycle of heating control described in Figures 36 and 37.

. The motor is not limited to a permanent magnet field magnet type synchronous motor, but may be, for example, a wound field magnet type synchronous motor with a field winding in the rotor. In this case, the control device 50 may apply q-axis voltage to the coil in addition to d-axis voltage during the heating control, while controlling the field current flowing through the field winding to zero. In this case, since the field current is zero, no torque is generated even if a q-axis current flows in the coil because of the application of q-axis voltage. As a result, the control device 50 can prevent the rotor from rotating due to the heating control. The motor is not limited to a synchronous motor.

. A braking device (e.g., side brake) that applies braking torque to the wheels (drive wheels) of a vehicle is provided in the vehicle. The control device 50 may apply a q-axis voltage to the coil in addition to the d-axis voltage, when the braking torque is applied to the wheel by the braking device to keep the wheel from rotating.

The switch of the power converter is not limited to being an IGBTs, but can be, for example, an N-channel MOSFET with a built-in body diode. In this case, the high potential terminal is the drain, and the low potential terminal is the source.

The motor is not limited to star-connected motor but may also be delta-connected motor.

The mobile object to which the system is mounted is not limited to vehicles, but may be, for example, an aircraft or a ship. The system is not limited to be mounted to mobile object but may also be mounted to stationary object.

The control units and methods described in this disclosure may be realized by a dedicated computer provided by comprising a processor and memory programmed to perform one or more functions embodied by a computer program. Alternatively, the control section and methods described in this disclosure may be realized by a dedicated computer provided by configuring the processor with one or more dedicated hardware logic circuits. Alternatively, the control section and its methods described in this disclosure may be realized by one or more dedicated computers provided by a combination of a processor and memory programmed to perform one or more functions and a processor configured by one or more dedicated hardware logic circuits. The computer program may also be stored in a primary computer-readable recording medium as instructions to be executed by a computer.

Although this disclosure has been described in accordance with examples, it is understood that this disclosure is not limited to the examples or structures. The present disclosure also encompasses various variations and transformations within the scope of equality. In addition, various combinations and forms, as well as other combinations and forms including only one element, more or less, thereof, also fall within the scope and idea of this disclosure.

The following is a description of the characteristic configurations extracted from each of the above-mentioned embodiments.

[Configuration 1]

A control device (50) for a power converter applied to a system including a power storage device (30) that can be charged and discharged, coils (11U-11W, 72, 83, 84), and the power converter (20, 70, 80) electrically connecting the coils and the power storage device, the device comprising:

> a determination unit that determines whether the storage unit needs to be heated; and
> a heating control unit that repeatedly executes a single cycle control mode in a specified cycle (Tinv) and performs switching control of the power converter to make the current flowing in the coil higher than 0 when the determination unit determined that the storage device needs to be heated,
> wherein the single cycle control mode includes a coil charge mode in which a current flowing in the coil is gradually increased and a coil discharge mode, which is executed after the coil charge mode, in which the current flowing in the coil is gradually decreased.

[Configuration 2]

The control device for the power converter as described in configuration 1,

wherein the single cycle control mode further includes a reflux mode in which the current flowing in the coil is maintained, and
the execution time of the coil charge mode (tchr) within the respective specified cycle is longer than the execution time of the coil discharge mode (tchr).

[Configuration 3]

The control device for the power converter as described in configuration 2,
wherein the system further comprises:

a high-potential line (22H) electrically connecting a positive pole of the power storage device and a high potential terminal of upper arm switches (SUH to SWH, SAH, SBH, S1H, S2H) that constitute the power converter;
a low-potential line (22L) electrically connecting a negative pole of the power storage device and a low-potential terminal of lower arm switches (SUL to SWL, SAL, SBL, S1L, S2L) that constitute the power converter;
a smoothing capacitor (24, 71, 81) electrically connecting the high potential line and the low potential line, and
wherein when the current flowing from the connection point of the high-potential line and the smoothing capacitor to the upper arm switch is defined as a switch current (Iinv) and the switch current flowing from the connection point with the smoothing capacitor to the upper arm switch is defined to be positive, the heating control unit performs:

making a positive switch current flow in the high potential line and gradually increasing the current value of the switch current and the current flowing in the coil in the coil charge mode;
setting the current value of the switch current to zero and maintaining the current flowing to the coil in the reflux mode; and
making a negative switch current flow in the high potential line and gradually reducing the current value of the switch current and the current flowing in the coil in the coil discharge mode.

[Configuration 4]

The control device for the power converter as described in any one of configurations 1-3,
wherein the system further comprises:

a high-potential line (22H) electrically connecting a positive pole of the power storage device and a high potential terminal of an upper arm switches (SUH to SWH, SAH, SBH, S1H, S2H) that constitutes the power converter;
a low-potential line (22L) electrically connecting a negative pole of the power storage device and a low-potential terminal of a lower arm switches (SUL to SWL, SAL, SBL, S1L, S2L) that constitutes the power converter;
a smoothing capacitor (24, 71, 81) electrically connecting the high potential line and the low potential line, and
wherein the specified period is set to a period corresponding to a frequency range in which the ratio of the current (Ibat) flowing in the storage capacitor to the current (Iinv) flowing from the connection point of the high-potential line and the smoothing capacitor to the upper arm switch exceeds 1 in the frequency characteristics of the circuit including the storage capacitor, the smoothing capacitor, the power converter, the high potential line and the low potential line.

[Configuration 5]

The control device for the power converter as described in any one of configurations 1-3,
wherein the system further comprises:

a high-potential line (22H) electrically connecting a positive pole of the power storage device and a high potential terminal of an upper arm switches (SUH to SWH, SAH, SBH, S1H, S2H) that constitutes the power converter;
a low-potential line (22L) electrically connecting a negative pole of the power storage device and a low-potential terminal of a lower arm switches (SUL to SWL, SAL, SBL, S1L, S2L) that constitutes the power converter;
a smoothing capacitor (24, 71, 81) electrically connecting the high potential line and the low potential line, and
wherein the frequency characteristics of the circuit including the power accumulator, the smoothing capacitor, the power converter, the high potential line, and the low potential line are such that the ratio of the current (Ibat) flowing in the power storage device to the current (Iinv) flowing from the connection point of the high-potential line and the smoothing capacitor to the upper arm switch is constant in the first frequency range from 0 Hz to a predetermined frequency, monotonically increases in the second frequency range adjacent to and on the high-frequency side of the first frequency range, and monotonically decreases in the third frequency range adjacent to and on the high-frequency side of the second frequency range, and

wherein the specified period is set to a period corresponding to the frequency range where the ratio is greater than the ratio at 1 Hz in the frequency characteristics.

[Configuration 6]

The control device for the power converter as described in configuration 1,

wherein the coils (11U-11W) are included in a motor (10), and
the heating control unit performs the switching control so that the motor does not generate torque due to the current flowing in the coil.

[Configuration 7]

The control device for the power converter as described in configuration 6,
wherein the heating control unit performs the switching control to make a d-axis current flows in the coil the d-axis current and a q-axis current.

[Configuration 8]

The control device for the power converter as described in configurations 6 or 7,
wherein the heating control unit performs the switching control to make a strong field current flows in the coil as the d-axis current.

[Configuration 9]

The control device for the power converter as described in any one of configurations 1-8,
wherein the heating control unit sets the amount of current change in the coil for the respective cycle to make a noise level generated by the switching control does not exceed the noise tolerance (Smax).

[Composition 10]

The control device for the power converter as described in configuration 9, further comprising:

an acquiring unit that acquires current information, the current information being information on an effective value or amplitude of a current flowing from the power storage device to the power converter,
a data storage(50b) that stores information relating a target current average value (Imgave*), the target current average value being a target value of a time average value of the current flowing to the coil when the coil charge mode and the coil discharge mode are repeated, a target current change (ΔI*), which is a target value of the amount of change of the current flowing to the coil in the coil charge mode, the current information, and the noise tolerance, and
wherein the heating control unit calculates the target current average value and the target current change amount based on the current information acquired by the acquiring unit and the stored information of the data storage and performs the switching control based on the calculated target current average value and the target current change amount.

[Configuration 11]

A program applied to a system including a power storage device (30) that can be charged and discharged, coils (11U-11W, 72, 83, 84), a power converter (20, 70, 80) electrically connecting the coils and the power converter, and a computer (50a),
the program causing the computer to:

determine whether the storage unit needs to be heated; and
repeatedly execute a single cycle control mode in a specified cycle and perform switching control of the power converter to make the current flowing in the coil higher than 0 when determined that the storage device needs to be heated,
wherein the single cycle control mode includes a coil charge mode in which a current flowing in the coil is gradually increased and a coil discharge mode in which the current flowing in the coil is gradually decreased, which is executed after the coil charge mode.

**Claims**

1. A control device (50) for a power converter applied to a system including a power storage device (30) that can be charged and discharged, coils (11U-11W, 72, 83, 84), and the power converter (20, 70, 80) electrically connecting the coils and the power storage device, the device comprising:

   a determination unit that determines whether the storage unit needs to be heated; and
   a heating control unit that repeatedly executes a single cycle control mode in a specified cycle (Tinv) and performs switching control of the power converter to make a current flowing in the coil higher than 0 when the determination unit determined that the storage device needs to be heated,
   wherein the single cycle control mode includes a coil charge mode in which the current flowing in the coil is gradually increased and a coil discharge mode in which the current flowing in the coil is gradually decreased, which is executed after the coil charge mode.

2. The control device for the power converter according to claim 1,

   wherein the single cycle control mode further includes a reflux mode in which the current flowing in the coil is maintained, and
   the execution time of the coil charge mode (tchr) within the respective specified cycle is longer than the execution time of the coil discharge mode (tchr).

3. The control device for the power converter according to claim 2,
   wherein the system further comprises:

   a high-potential line (22H) electrically connecting a positive pole of the power storage device and a high potential terminal of an upper arm switches (SUH to SWH, SAH, SBH, S1H, S2H) that constitutes the power converter;
   a low-potential line (22L) electrically connecting a negative pole of the power storage device and a low-potential terminal of a lower arm switches (SUL to SWL, SAL, SBL, S1L, S2L) that constitutes the power converter;
   a smoothing capacitor (24, 71, 81) electrically connecting the high potential line and the low potential line, and
   wherein when the current flowing from the connection point of the high-potential line and the smoothing capacitor to the upper arm switch is defined as a switch current (Iinv) and the switch current flowing from the connection point with the smoothing capacitor to the upper arm switch is defined to be positive, the heating control unit performs:

   making a positive switch current flow in the high potential line and gradually increasing the current value of the switch current and the current flowing in the coil in the coil charge mode;
   setting the current value of the switch current to zero and maintaining the current flowing to the coil in the reflux mode; and
   making a negative switch current flow in the high potential line and gradually reducing the current value of the switch current and the current flowing in the coil in the coil discharge mode.

4. The control device for the power converter according to any one of claims 1-3,
   wherein the system further comprises:

   a high-potential line (22H) electrically connecting a positive pole of the power storage device and a high potential terminal of an upper arm switches (SUH to SWH, SAH, SBH, S1H, S2H) that constitutes the power converter;
   a low-potential line (22L) electrically connecting a negative pole of the power storage device and a low-potential terminal of a lower arm switches (SUL to SWL, SAL, SBL, S1L, S2L) that constitutes the power converter;
   a smoothing capacitor (24, 71, 81) electrically connecting the high potential line and the low potential line, and
   wherein the specified period is set to a period corresponding to a frequency range in which the ratio of the current (Ibat) flowing in the storage capacitor to the current (Iinv) flowing from the connection point of the high-potential line and the smoothing capacitor to the upper arm switch exceeds 1 in the frequency characteristics of the circuit including the storage capacitor, the smoothing capacitor, the power converter, the high potential line and the low potential line.

**5.** The control device for the power converter according to any one of claims 1-3,
wherein the system further comprises:

a high-potential line (22H) electrically connecting a positive pole of the power storage device and a high potential terminal of an upper arm switches (SUH to SWH, SAH, SBH, S1H, S2H) that constitutes the power converter;
a low-potential line (22L) electrically connecting a negative pole of the power storage device and a low-potential terminal of a lower arm switches (SUL to SWL, SAL, SBL, S1L, S2L) that constitutes the power converter;
a smoothing capacitor (24, 71, 81) electrically connecting the high potential line and the low potential line, and wherein the frequency characteristics of the circuit including the power accumulator, the smoothing capacitor, the power converter, the high potential line, and the low potential line are such that the ratio of the current (Ibat) flowing in the power storage device to the current (Iinv) flowing from the connection point of the high-potential line and the smoothing capacitor to the upper arm switch is constant in the first frequency range from 0 Hz to a predetermined frequency, monotonically increases in the second frequency range adjacent to and on the high-frequency side of the first frequency range, and monotonically decreases in the third frequency range adjacent to and on the high-frequency side of the second frequency range, and
wherein the specified period is set to a period corresponding to the frequency range where the ratio is greater than the ratio at 1 Hz in the frequency characteristics.

**6.** The control device for the power converter according to claim 1,

wherein the coils (11U-11W) are included in a motor (10), and
the heating control unit performs the switching control so that the motor does not generate torque due to the current flowing in the coil.

**7.** The control device for the power converter according to claim 6,
wherein the heating control unit performs the switching control to make a d-axis current flows in the coil among the d-axis current and a q-axis current.

**8.** The control device for the power converter according to claims 6 or 7,
wherein the heating control unit performs the switching control to make a strong field current flows in the coil as the d-axis current.

**9.** The control device for the power converter according to any one of claims 1-8,
wherein the heating control unit sets the amount of current change in the coil for the respective cycle to make a noise level generated by the switching control does not exceed the noise tolerance (Smax).

**10.** The control device for the power converter according to claim 9, further comprising:

an acquiring unit that acquires current information, the current information being information on an effective value or amplitude of a current flowing from the power storage device to the power converter,
a data storage(50b) that stores information relating a target current average value (Imgave*), the target current average value being a target value of a time average value of the current flowing to the coil when the coil charge mode and the coil discharge mode are repeated, a target current change ($\Delta I^*$), which is a target value of the amount of change of the current flowing to the coil in the coil charge mode, the current information, and the noise tolerance, and
wherein the heating control unit calculates the target current average value and the target current change amount based on the current information acquired by the acquiring unit and the stored information of the data storage and performs the switching control based on the calculated target current average value and the target current change amount.

**11.** A program applied to a system including a power storage device (30) that can be charged and discharged, a coils (11U-11W, 72, 83, 84), a power converter (20, 70, 80) electrically connecting the coils and the power converter, and a computer (50a),
the program causing the computer to:

determine whether the storage unit needs to be heated; and
repeatedly execute a single cycle control mode in a specified cycle and perform switching control of the power converter to make a current flowing in the coil higher than 0 when determined that the storage device needs to be heated,
wherein the single cycle control mode includes a coil charge mode in which the current flowing in the coil is gradually increased and a coil discharge mode in which the current flowing in the coil is gradually decreased, which is executed after the coil charge mode.

# FIG.1

# FIG.2

```
         ┌──────────┐
         │  START   │
         └──────────┘
              │                    ⌒S10
    ┌─────────────────────┐
    │      SET finv*      │
    └─────────────────────┘
              │                    ⌒S11
    ┌─────────────────────┐
    │      SET Smax       │
    └─────────────────────┘
              │                    ⌒S12
    ┌─────────────────────┐
    │    ACQUIRE Tbat*    │
    └─────────────────────┘
              │                    ⌒S13
         ╱─────────────────────╲        NO
        ⟨   Tbatr < Tbat* ?     ⟩──────→
         ╲─────────────────────╱
              │ YES
              │                    ⌒S14
    ┌─────────────────────┐
    │  CALCULATE Ibatrms* │
    └─────────────────────┘
              │                    ⌒S15
    ┌─────────────────────┐
    │  CALCULATE Iinvrms* │
    └─────────────────────┘
              │                    ⌒S16
    ┌─────────────────────┐
    │ CALCULATE Imgave*, ΔI* │
    └─────────────────────┘
              │                    ⌒S17
    ┌─────────────────────┐
    │ CALCULATE tchr, tzchr, tdis, tzdis │
    └─────────────────────┘
              │                    ⌒S18
    ┌─────────────────────┐
    │    SW CONTROL       │
    └─────────────────────┘
              │
         ┌──────────┐
         │   END    │
         └──────────┘
```

# FIG.3

# FIG.4

# FIG.5

# FIG.6

# FIG.7

```
CALCULATE Ibatrms*
        │
        ▼           S20
   SET Pheat
        │
        ▼           S21
    SET Rbat
        │
        ▼           S22
 CALCULATE Ibatrms
        │
        ▼
     RETURN
```

# FIG.8

Img

Imgave

ΔImg

0                    time

# FIG.9

ΔImg

SOUND PRESSURE LEVEL: HIGH

SOUND PRESSURE LEVEL: MIDDLE

SOUND PRESSURE LEVEL: LOW

0                    Imgave

# FIG.10

| COIL CHARGE MODE | REFLUX MODE | COIL DISCHARGE MODE |
| t1 | t2 | t3 | t4 |

# FIG.11

⟨COIL CHARGE MODE⟩

# FIG.12

<REFLUX MODE>

# FIG.13

<COIL DISCHARGE MODE>

24

# FIG.14

# FIG.15

# FIG.16

# FIG.17

# FIG.18

# FIG.19

# FIG.20

# FIG.21

# FIG.22

tzchr

tchr, finv

# FIG.23

tdis

Δl

# FIG.24

tdis

Imgave

# FIG.25

tzdis

tdis, finv

# FIG.26

# FIG.27

| VECTOR | U UPPER/LOWER | V UPPER/LOWER | W UPPER/LOWER |
|---|---|---|---|
| V0 : 000 | OFF/ON | OFF/ON | OFF/ON |
| V1 : 100 | ON/OFF | OFF/ON | OFF/ON |
| V2 : 010 | OFF/ON | ON/OFF | OFF/ON |
| V3 : 001 | OFF/ON | OFF/ON | ON/OFF |
| V4 : 011 | OFF/ON | ON/OFF | ON/OFF |
| V5 : 101 | ON/OFF | OFF/ON | ON/OFF |
| V6 : 110 | ON/OFF | ON/OFF | OFF/ON |
| V7 : 111 | ON/OFF | ON/OFF | ON/OFF |

# FIG.28

# FIG.29

TRAJECTORY OF D,
Q-AXIS CURRENTS ID,
IQ IN HEATING CONTROL

# FIG.30

# FIG.31

Tinv

Tinv/2      Tinv/2

Img

0                                                    time

tcr1    tcr2    tds1    tds2

tzcr1    tzcr2    tzds1    tzds2

$\left( \begin{array}{l} \cdot tcr1+tcr2=tchr \\ \cdot tzcr1+tzcr2=tzchr \\ \cdot tds1+tds2=tdis \\ \cdot tzds1+tzds2=tzdis \end{array} \right)$

# FIG.32

Tinv

Tinv/2      Tinv/2

Img

0                                                    time

tchr                tdis

tzchr                tzdis
(COIL CHARGE MODE,        (COIL CHARGE MODE,
COIL DISCHARGE MODE)    COIL DISCHARGE MODE)

# FIG.33

# FIG.34

# FIG.35

# FIG.36

# FIG.37

## INTERNATIONAL SEARCH REPORT

| International application No. |
| --- |
| **PCT/JP2022/043527** |

**A. CLASSIFICATION OF SUBJECT MATTER**

*H02M 7/48*(2007.01)i; *B60L 9/18*(2006.01)i; *B60L 50/60*(2019.01)i; *B60L 58/25*(2019.01)i; *H02M 3/155*(2006.01)i
FI:   H02M7/48 L; B60L9/18 J; B60L50/60; B60L58/25; H02M3/155 W

According to International Patent Classification (IPC) or to both national classification and IPC

**B. FIELDS SEARCHED**

Minimum documentation searched (classification system followed by classification symbols)

H02M7/42-7/98; B60L1/00-58/40; H02M3/00-3/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2014-124076 A (TOYOTA INDUSTRIES CORP.) 03 July 2014 (2014-07-03) paragraphs [0002], [0019]-[0069], fig. 1-9 | 1, 6, 11 |
| Y | | 7-9 |
| A | | 2-5, 10 |
| Y | JP 2001-197607 A (DAIHATSU MOTOR CO., LTD.) 19 July 2001 (2001-07-19) paragraphs [0023]-[0030], [0035], fig. 1 | 7-8 |
| Y | JP 2010-93969 A (DENSO CORP.) 22 April 2010 (2010-04-22) paragraphs [0016], [0017], [0023]-[0037], fig. 1, 3 | 9 |
| A | | 10 |
| A | JP 2007-12568 A (TOYOTA MOTOR CORP.) 18 January 2007 (2007-01-18) entire text, all drawings | 1-11 |
| A | JP 2013-242110 A (TOYOTA INDUSTRIES CORP.) 05 December 2013 (2013-12-05) entire text, all drawings | 1-11 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 January 2023** | **07 February 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2022/043527** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2007-26700 A (TOYOTA MOTOR CORP.) 01 February 2007 (2007-02-01)<br>entire text, all drawings | 1-11 |
| A | JP 2020-72554 A (TOYOTA INDUSTRIES CORP.) 07 May 2020 (2020-05-07)<br>entire text, all drawings | 1-11 |

Form PCT/ISA/210 (second sheet) (January 2015)

Form PCT/ISA/210 (patent family annex) (January 2015)

<div align="center">

**INTERNATIONAL SEARCH REPORT**
**Information on patent family members**

</div>

International application No.

**PCT/JP2022/043527**

| Patent document cited in search report | | | Publication date (day/month/year) | Patent family member(s) | | | Publication date (day/month/year) |
|---|---|---|---|---|---|---|---|
| JP | 2014-124076 | A | 03 July 2014 | US | 2015/0295514 | A1 | |
| | | | | paragraphs [0002], [0018]-[0079], fig. 1-9 | | | |
| | | | | WO | 2014/080741 | A1 | |
| | | | | EP | 2924875 | A1 | |
| JP | 2001-197607 | A | 19 July 2001 | (Family: none) | | | |
| JP | 2010-93969 | A | 22 April 2010 | (Family: none) | | | |
| JP | 2007-12568 | A | 18 January 2007 | (Family: none) | | | |
| JP | 2013-242110 | A | 05 December 2013 | (Family: none) | | | |
| JP | 2007-26700 | A | 01 February 2007 | US | 2008/0143281 | A1 | |
| | | | | entire text, all drawings | | | |
| | | | | WO | 2007/007900 | A1 | |
| | | | | EP | 1903670 | A1 | |
| | | | | CN | 101223685 | A | |
| JP | 2020-72554 | A | 07 May 2020 | DE | 102019216554 | A1 | |

**EP 4 456 405 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021210972 A

- JP 5849917 B